(19) Europäisches Patentamt
European Patent Office
Office européen des brevets

(11) EP 0 482 562 B1

(12) **EUROPEAN PATENT SPECIFICATION**

(45) Date of publication and mention
of the grant of the patent:
**01.05.1996 Bulletin 1996/18**

(51) Int Cl.$^6$: **G01K 1/00**

(21) Application number: **91117939.8**

(22) Date of filing: **21.10.1991**

(54) **Electronic clinical thermometer**

Elektronisches Medizinalthermometer

Thermomètre électronique médical

(84) Designated Contracting States:
**BE DE FR GB IT NL SE**

(30) Priority: **24.10.1990 JP 284447/90**

(43) Date of publication of application:
**29.04.1992 Bulletin 1992/18**

(73) Proprietor: **TERUMO KABUSHIKI KAISHA
Tokyo 151 (JP)**

(72) Inventors:
- **Muramoto, Yutaka,
c/o Terumo Kabushiki Kaisha
Ashigarakami-gun, Kanagawa-ken (JP)**
- **Ikeda, Makoto, c/o Terumo Kabushiki Kaisha
Ashigarakami-gun, Kanagawa-ken (JP)**
- **Toriumi, Makoto, c/o Terumo Kabushiki Kaisha
Ashigarakami-gun, Kanagawa-ken (JP)**

(74) Representative: **Henkel, Feiler, Hänzel & Partner
Möhlstrasse 37
D-81675 München (DE)**

(56) References cited:
**EP-A- 0 290 352       EP-A- 0 332 700
EP-A- 0 413 814       WO-A-88/01047**

**Description**

BACKGROUND OF THE INVENTION

Field of the Invention:

This invention relates to an electronic clinical thermometer and, more particularly, to an electronic clinical thermometer of the predicting type.

Description of the Prior Art:

According to the prior art, a predicting-type electronic clinical thermometer predicts equilibrium temperature using a prescribed predictive mathematical equation and a condition which should be satisfied in order for a prediction to be valid. If we let t represent time and T a detected temperature, then a predicted equilibrium temperature Y at time t will be given by the following equation:

$$Y(t) = T(t) + U(t) \qquad (1)$$

where a U represents a bias for prediction.

As described in EP-A No. 290,352 filed on 6 May. 1988, it can be assumed that the bias value is proportional to time as the first approximation with respect to a certain rate of change in temperature. If the relationship between the bias and time are obtainable with respect to various rates of change in temperature, it can be expressed as follows :

$$U(t) = An{\cdot}t + Bn \qquad (2)$$

$$(n=1,N \quad N : \text{the number of } dT/dt \text{ obtained})$$

Since the slope (An) and the intercept (Bn) in Eq. (3) can be represented by a linear relationship with respect to the rates of change in temperature, based on a number of experiments of measuring body temperature, An and Bn are given as :

$$An = a(dT/dt) + c \qquad (3)$$

$$Bn = b(dT/dt) + d \qquad (4)$$

Using Eqs.(2),(3) and (4), then the following equation is obtained :

$$U(t) = (at+b)dT/dt + ct + d \qquad (5)$$

where

a = 0.04321

b = 0.38085

c = -0.0014 and

d = 0.17734.

The condition which should hold for a valid prediction is as follows:

$$dT/dt = 0.30/20 \ (°C/sec) \qquad (6)$$

More specifically, when the rate of change in detected temperature with respect to time attains a predetermined value, namely when the aforementioned condition is realized during temperature detection, a buzzer incorporated within the electronic clinical thermometer is sounded to inform the person taking the temperature measurement of the fact that temperature detection has ended.

Though an accurate prediction can be made under fixed conditions in the example of the prior art described above, a change in the circumstances in which the thermometer is being used during temperature detection is not taken into account. Consequently, an accurate predicted temperature cannot be obtained if the circumstances of use change.

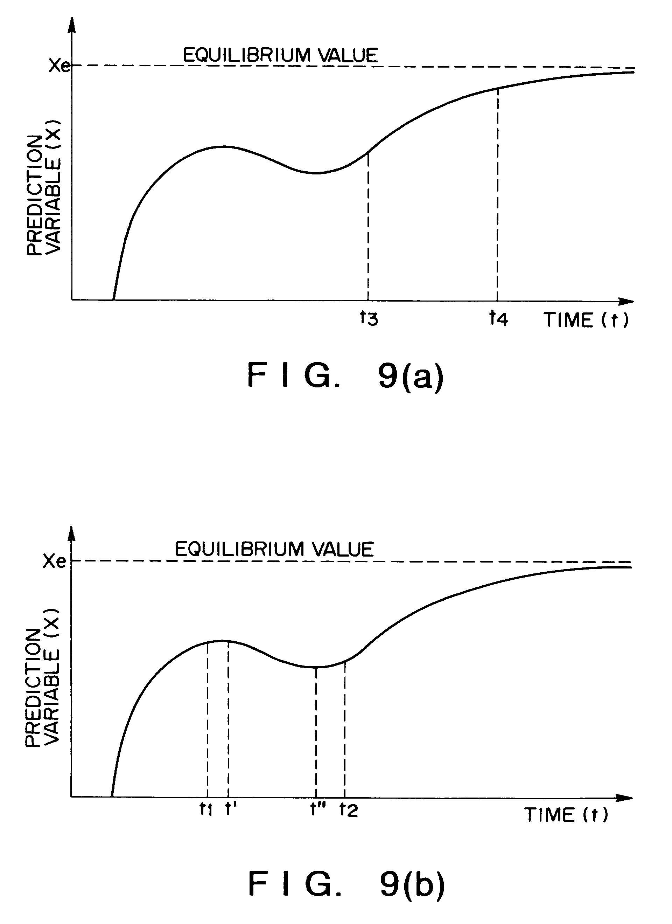

The foregoing will be described in greater detail. A curve shown in Fig. 9(a) indicating a change in a prediction variable (X) with time will be considered as an example. In accordance with Fig. 9(a), the prediction variable (X) gradually approaches an equilibrium value (Xe) with the passage of time. Therefore, the rate of change in the prediction variable with time (namely dX/dt) approaches "0" as the variable (X) approaches the equilibrium value (Xe). For example, dX/dt takes on a positive value and decreases monotonously from time $t_3$ to time $t_4$. However, when dX/dt is considered from time $t_1$ to $t_2$, as shown in Fig. 9(b), dX/dt takes on a positive value and increases monotonously from time $t_1$ to time t', and X attains its maximum value at time t'. Further, dx/dt takes on a negative value and decreases monotonously from time t' to time t", and X attains its minimum value at time t". From time t" to time $t_2$, dX/dt takes on a positive value and increases monotonously.

Assume that the foregoing variable (X) is applied to a predicted temperature (Tp). If the position of the tip of the probe at the end of the electronic clinical thermometer should happen to shift because of a change in the manner in which the thermometer is being held in the subject's armpit, for example, then the rate of change in the detected temperature with time (i.e., dT/dt) at this moment will suddenly decline and a state corresponding to the time region $t_1$ - $t_2$ shown in Fig. 9 will occur. In other words, the condition for a valid prediction expressed by Eq. (6) above happens to be satisfied and a value much lower than the equilibrium value which would have been attained originally is regarded as being the predicted temperature. Thus, there is a decline in the accuracy of prediction.

SUMMARY OF THE INVENTION

Accordingly, an object of the present invention is to provide an electronic clinical thermometer in which prediction accuracy is maintained even if there is a change in the condition of use during temperature detection.

According to the present invention, the foregoing object is attained by providing an electronic clinical thermometer for measuring the body temperature of a region whose temperature is to be measured, comprising temperature detecting means for measuring the temperature of the region at a predetermined time interval,

memory means for storing the body temperature, predicting means for predicting a predicted equilibrium temperature based upon the body temperature measured by the temperature detecting means, time detecting means for detecting a time at which a rate of change in the body temperature with time attains a predetermined value, calculating means for calculating a temporal fluctuation in the predicted equilibrium temperature within a predetermined time range in which the time detected by the time detecting means serves as a reference, comparing means for comparing the temporal fluctuation in the predicted equilibrium temperature calculated by the calculating means with a predetermined comparison value, and display control means which, based upon results of the comparison performed by the comparing means, is for displaying the predicted equilibrium temperature obtained at the time detected by the time detecting means, and controlling the temperature measurement performed by the temperature detecting means.

According to the present invention constructed as described above, the moment at which the rate of change in the measured temperature with time attains the predetermined value is taken as an opportunity to check the temporal fluctuation of the predicted equilibrium temperature within a fixed reference time range. If the predicted equilibrium temperature is found to have stabilized, the temperature detection is terminated. If the predicted equilibrium temperature has not stabilized, the temperature detection is continued.

In accordance with the present invention, as described above, the process through which an allowable condition for a valid prediction was realized is investigated looking back a predetermined length of time from the moment at which the condition was realized, and the result of the investigation is applied when evaluating the validity of the prediction. As a result, a highly accurate temperature prediction can be performed even if the circumstances in which the thermometer is being used changes during temperature detection.

Other features and advantages of the present invention will be apparent from the following description taken in conjunction with the accompanying drawings, in which like reference characters designate the same or similar parts throughout the figures thereof.

BRIEF DESCRIPTION OF THE DRAWINGS

The accompanying drawings, which are incorporated in and constitute a part of the specification, illustrate an embodiment of the invention and, together with the description, serve to explain the principles of the invention.

Fig. 1 is an external view showing an electronic clinical thermometer which is a typical embodiment of the present invention;
Fig. 2 is a block diagram illustrating in detail the construction of the main unit of the electronic clinical thermometer;
Fig. 3 is a flowchart illustrating a temperature predicting procedure;
Fig. 4 is a diagram illustrating the degree of stability of predicted temperature;
Fig. 5 is a diagram illustrating a range over which the degree of stability of predicted temperature is judged;
Fig. 6 is a diagram illustrating a regression line in a case where detected temperature is stable;
Fig. 7 is a diagram illustrating a regression line in a case where detected temperature is not stable;
Fig. 8 is a diagram illustrating another definition of degree of stability; and
Figs. 9(a) and 9(b) are diagrams illustrating a temporal change in a prediction variable according to an example of the prior art.

DESCRIPTION OF THE PREFERRED EMBODIMENT

A preferred embodiment of the present invention will now be described in detail in accordance with the accompanying drawings.

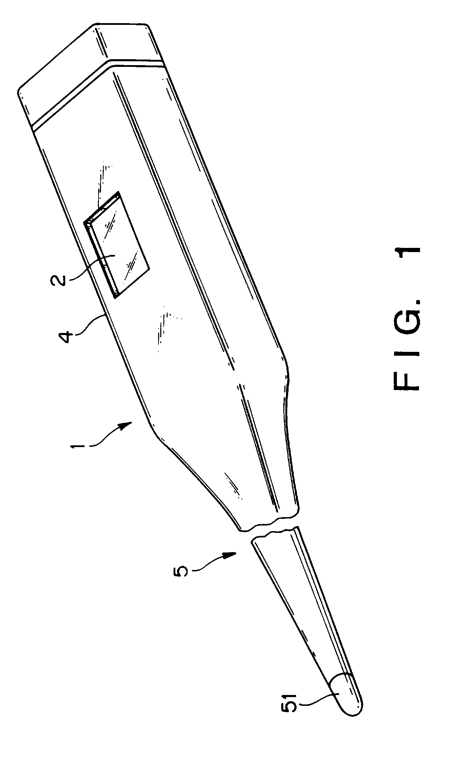

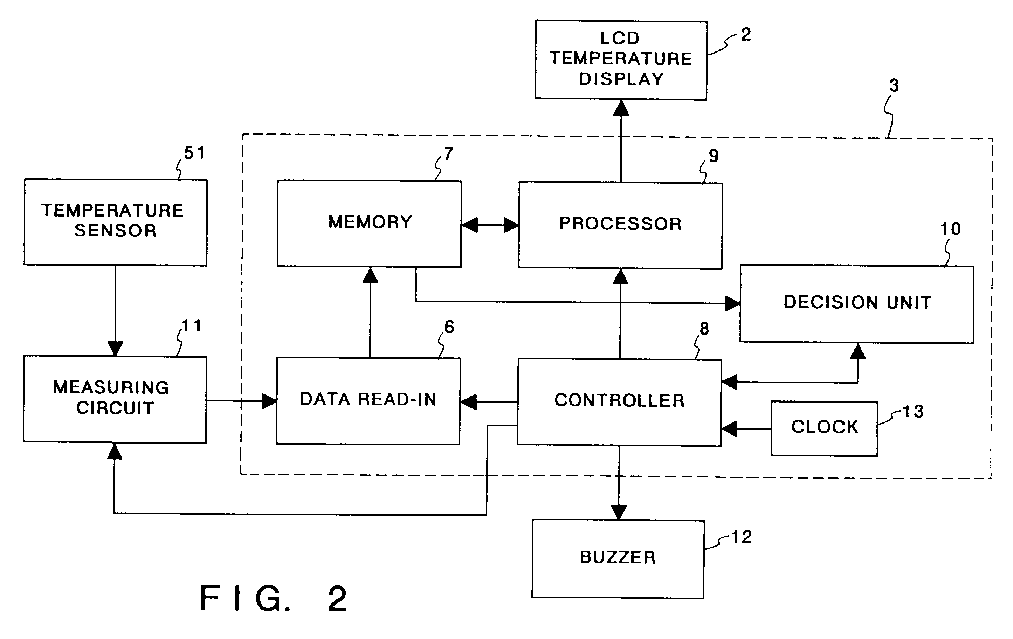

Fig. 1 is an external view of an electronic clinical thermometer 1 illustrative of a typical embodiment of the present invention. In Fig. 1, numeral 2 denotes a LCD temperature display unit, 4 a main unit accommodating a predicting block 3, a temperature measuring circuit 11 and a buzzer 12, 5 a probe and 51 a temperature sensing unit. As shown in Fig. 2, the predicting block 3 is constituted by a data read-in unit 6, a memory 7, a controller 8, a processor 9, a decision unit 10 and a clock 13.

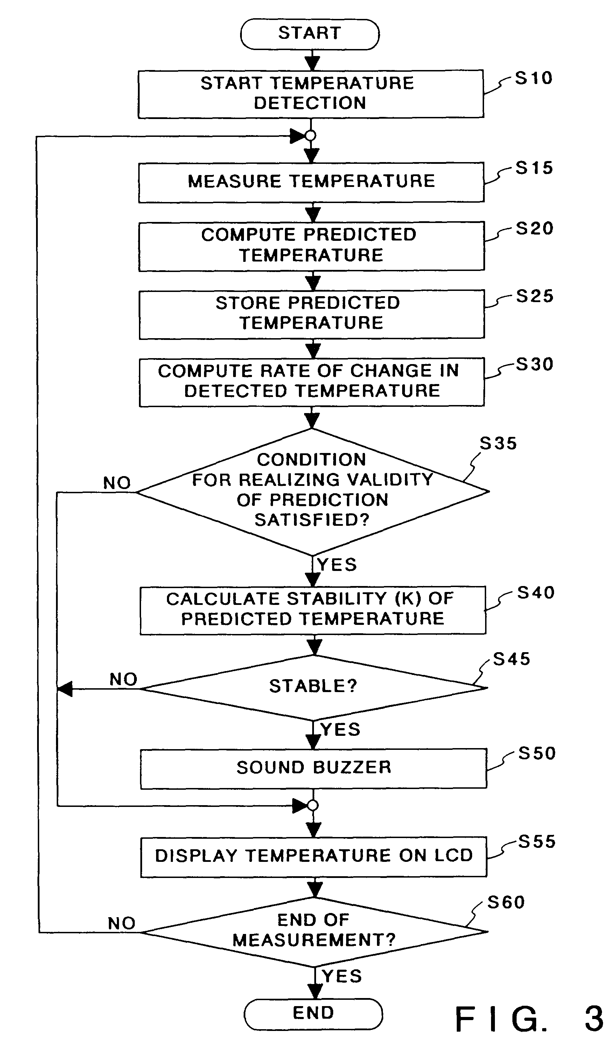

The flowchart shown in Fig. 3 will be used to describe a procedure for temperature prediction executed by the electronic clinical thermometer having the construction set forth above.

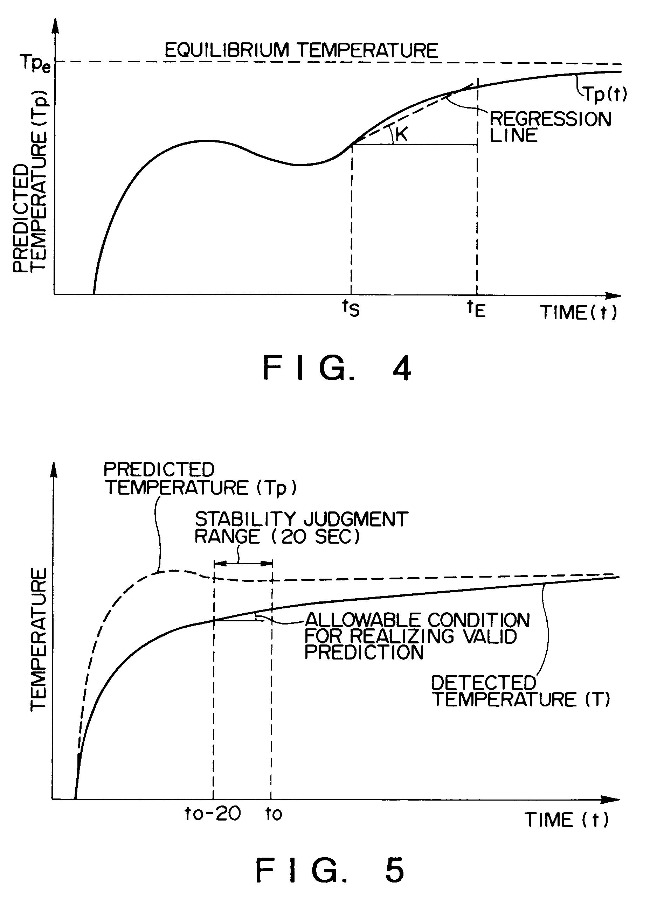

The basic approach of this embodiment is to investigate the stability of predicted temperature from a change in the predicted temperature with time during detection of the temperature. Accordingly, let Tp represent the predicted temperature. In this embodiment, Eq. (3) is deemed to be the condition which must hold for realizing the validity of a prediction. Further, as illustrated in Fig. 4, the degree (K) of stability of predicted temperature is defined as being the value of the slope of a regression line obtained using the method of least squares in a closed interval $[t_S, t_E]$ of a curve Tp(t) representing a change in the predicted temperature (Tp) with time.

First, when temperature detection starts at step S10 of the flowchart, the measuring circuit 11 acquires data from the temperature sensing unit 51, in response to control by the controller 8, at a very small time interval ($\Delta t$) at step S15. Next, at step S20, the predicting block 3 reads in the acquired data in real-time through the data read-in unit 6, converts the data into temperature (detected temperature T) by means of the processor 9, stores this temperature in the memory 7 and performs a temperature prediction to obtain the predicted temperature (Tp). The predicted temperature (Tp) thus obtained is stored in the memory 7 at step S25. The rate of change ($\Delta T/\Delta t$) in the detected temperature is then obtained at step S30.

This is followed by step S35, at which the decision unit 10 examines whether the rate of change ($\Delta T/\Delta t$) in the detected temperature satisfies the condition which must hold for realizing the validity of a prediction. If this condition is satisfied, the program proceeds to step S40. If the condition is not satisfied, the program proceeds to step S55, where the predicted temperature (Tp) prevailing at this time is displayed on the LCD temperature display unit 2. It is then decided at step S60 to continue temperature detection, after which the program returns to step S15.

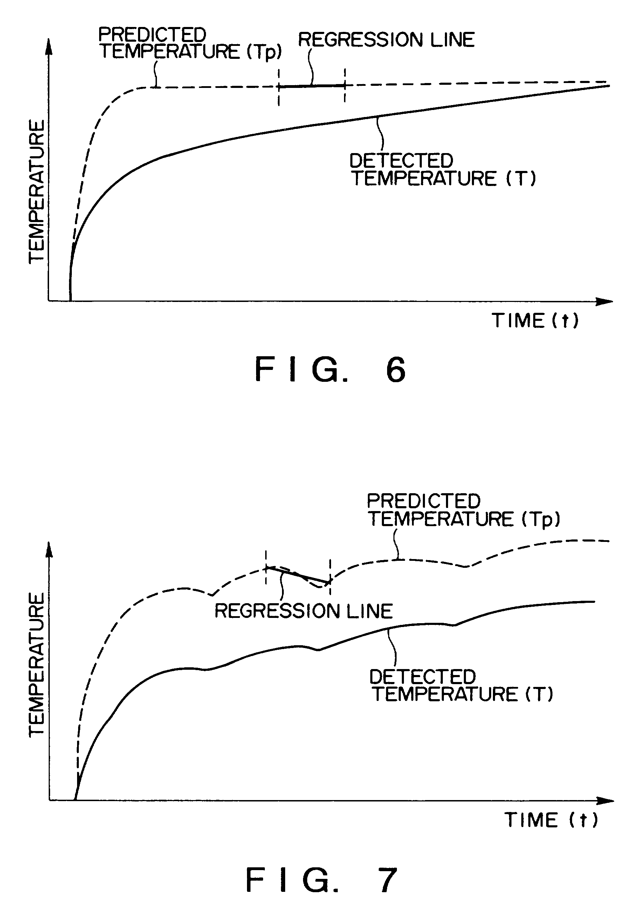

Step S40 calls for the processor 40 to compute the degree (K) of stability of the predicted temperature (Tp). In this embodiment, as illustrated in Fig. 5, a period of time adopted for judging degree of stability is that extending back 20 seconds from the moment ($t_0$) at which the condition for realizing the validity of a prediction is satisfied. More specifically, the degree (K) of stability is obtained from the closed interval [$t_0$-20 (sec), $t_0$] of the predicted-temperature curve (Tp(t)). If the change in the detected temperature (T) with time makes an ideal transition without being influenced from the outside, then the degree (K) of stability will possess a value approximating "0" and, as shown in Fig. 6, the regression line will come near to being parallel with the time axis. On the other hand, if there is an external influence, the condition for realizing the validity of a prediction will be satisfied only temporarily, and the degree of stability (K) will take on a value remote from "0". As a result, the regression line will exhibit a large slope, as shown in Fig. 7.

Next, at step S45, the decision unit 10 compares the value of stability (K) with a predetermined reference value (KA). If the result is that the value of stability (K) is less that the reference value (KA), the program proceeds to step S50, where it is deemed that the predicted temperature is sufficiently accurate and the buzzer 12 is sounded to inform the user of the fact that temperature detection has ended. The predicted temperature (Tp) is displayed on the LCD temperature display unit 2 at step S55, after which it is decided at step S60 to halt temperature detection. If the value of stability (K) is found to be greater than the reference value (KA), however, then the program proceeds from step S45 to step S55, where the predicted temperature (Tp) prevailing at this time is displayed on the LCD temperature display unit 2. It is then decided at step S60 to continue temperature detection, after which the program returns to step S15. Temperature detection is continued at step S15 until the value of stability (K) becomes sufficiently small.

In this embodiment, KA$\leq$0.04(°C)/20 sec is used as the reference value (KA).

Thus, in accordance with this embodiment, the process through which an allowable condition for a valid prediction was realized is investigated looking back a predetermined length of time from the moment at which the condition was realized. This makes it possible to obtain a highly accurate predicted temperature that is not susceptible to the effects of a temporary change in detected temperature.

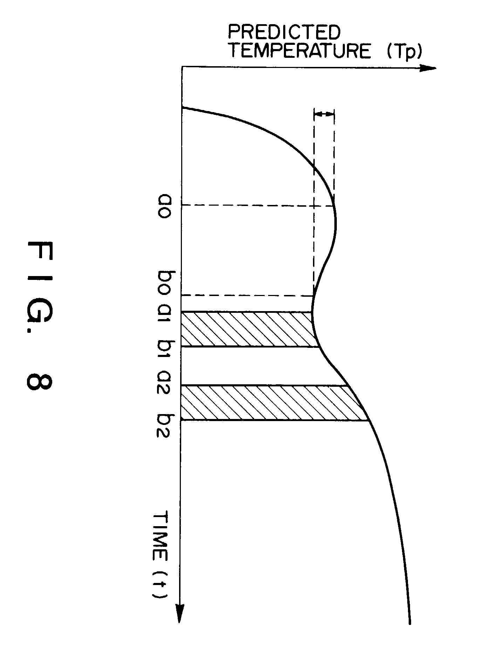

Only a preferred embodiment of the present invention is described above. For example, the degree (K) of stability of predicted temperature is defined as being the value of the slope of the regression line obtained using the method of least squares in the closed interval [$t_S$, $t_E$] of the curve Tp(t) representing a change in the predicted temperature (Tp) with time. However, this does not impose a limitation upon the present invention. For example, as the degree (K) of stability, it is possible to use an intercept of the aforesaid regression line or, as illustrated in Fig. 8, the difference between maximum and minimum values of the predicted temperature (Tp) in the closed interval [$a_0, b_0$], the difference between the mean value of the predicted temperature (Tp) and the maximum value or minimum value in the closed interval [$a_0$, $b_0$], or a value obtained by integrating the predicted-temperature curve (Tp) with regard to the closed interval [$a_i$, $b_i$] (i = 1, 2 in Fig.8).

As many apparently widely different embodiments of the present invention can be made, it is to be understood that the invention is not limited to the specific embodiments thereof except as defined in the appended claims.

**Claims**

1. An electronic clinical thermometer for measuring body temperature of a region whose temperature is to be measured, comprising:

temperature detecting means for measuring said body temperature of the region at a predetermined time interval;
memory means for storing said body temperature;
predicting means for predicting a predicted equilibrium temperature based upon said body temperature measured by said temperature detecting means;
time detecting means for detecting a time at which a rate of change in said body temperature with time attains a predetermined value;
characterized by
calculating means, calculating a temporal fluctuation in said predicted equilibrium temperature within a predetermined time range in which the time detected by said time detecting means serves as a reference;
comparing means, comparing said temporal fluctuation in said predicted equilibrium temperature calculated by said calculating means with a predetermined comparison value; and display control means which, based upon results of the comparison performed by said comparing means, display said predicted equilibrium temperature obtained at the time detected by said time detecting means, and control the temperature measurement performed by said temperature detecting means.

2. The thermometer according to claim 1, wherein said calculating means obtains a regression line from a fluctuation in the predicted equilibrium temperature with time within a predetermined time range, and employs the slope of said regression line as an index of said fluctuation in said predicted equilibrium temperature with time.

3. The thermometer according to claim 1, wherein said calculating means obtains a regression line from a fluctuation in said predicted equilibrium temperature with time within a predetermined time range, and employs an intercept of said regression line as an index of said fluctuation in said predicted equilibrium temperature with time.

4. The thermometer according to claim 1, wherein said calculating means obtains the difference between a maximum value and minimum value of said predicted equilibrium temperature, the difference between the mean value of said predicted equilibrium temperature and the maximum value, or the difference between the mean value of said predicted equilibrium temperature and the minimum value, within said predetermined time range, and employs any one of these values as an index of said fluctuation in said predicted equilibrium temperature with time.

5. The thermometer according to claim 1, wherein said calculating means calculates a value, which is the result of integrating, with regard to a predetermined closed interval, a curve indicative of a change in the predicted equilibrium value with time obtained from a fluctuation in said predicted equilibrium temperature with time within said predetermined time range, and employs this calculated value as an index of said fluctuation in the predicted equilibrium temperature with time.

**Patentansprüche**

1. Elektronisch klinisches Thermometer zum Messen der Körpertemperatur eines Bereiches, dessen Temperatur zu messen ist, mit:

einer Temperaturdetektoreinrichtung zum Messen der Körpertemperatur des Bereiches zu einem vorbestimmten Zeitintervall,
einer Speichereinrichtung zum Speichern der Körpertemperatur,
einer Vorhersageeinrichtung zum Vorhersagen einer vorhergesagten Gleichgewichtstemperatur aufgrund der Körpertemperatur, die durch die Temperaturdetektoreinrichtung gemessen ist,
einer Zeitdetektoreinrichtung zum Erfassen einer Zeit, zu der eine Änderungsrate in der Körpertemperatur mit der Zeit einen vorbestimmten Wert erreicht,

gekennzeichnet durch

eine Recheneinrichtung, die eine zeitweise Fluktuation in der vorhergesagten Gleichgewichtstemperatur innerhalb eines vorbestimmten Zeitbereiches berechnet, in welchem die durch die Zeitdetektoreinrichtung erfaßte Zeit als ein Bezugsmaß dient,
eine Vergleichseinrichtung, die die zeitweise Fluktuation in der durch die Recheneinrichtung berechneten vorhergesagten Gleichgewichtstemperatur mit einem vorbestimmten Vergleichswert vergleicht, und
eine Anzeigesteuereinrichtung, die aufgrund der Ergebnisse des durch die Vergleichseinrichtung durchgeführten Vergleiches die vorhergesagte Gleichgewichtstemperatur anzeigt, die zu der Zeit erhalten ist, die durch die Zeiterfassungseinrichtung erfaßt ist, und die die durch die Temperaturdetektoreinrichtung durchgeführte Temperaturmessung steuert.

2. Thermometer nach Anspruch 1, bei dem die Recheneinrichtung eine Regressionslinie aus einer Fluktuation in der vorhergesagten Gleichgewichtstemperatur mit der Zeit innerhalb eines vorbestimmten Zeitbereiches erhält und die Neigung der Regressionslinie als einen Index der Fluktuation in der vorhergesagten Gleichgewichtstemperatur mit der Zeit verwendet.

3. Thermometer nach Anspruch 1, bei dem die Recheneinrichtung eine Regressionslinie aus einer Fluktuation in der vorhergesagten Gleichgewichtstemperatur mit der Zeit innerhalb eines vorbestimmten Zeitbereiches erhält und einen Abschnitt der Regressionslinie als einen Index der Fluktuation in der vorhergesagten Gleichgewichtstemperatur mit der Zeit verwendet.

4. Thermometer nach Anspruch 1, bei dem die Recheneinrichtung die Differenz zwischen einem Maximalwert und einem Minimalwert der vorhergesagten Gleichgewichtstemperatur, die Differenz zwischen dem Mittelwert der vorhergesagten Gleichgewichtstemperatur und dem Maximalwert oder die Differenz zwischen dem Mittelwert der vorhergesagten Gleichgewichtstemperatur und dem Minimalwert innerhalb des vorbestimmten Zeitbereiches erhält und einen dieser Werte als einen Index der Fluktuation in der vorhergesagten Gleichgewichtstemperatur mit der Zeit verwendet.

5. Thermometer nach Anspruch 1, bei dem die Recheneinrichtung einen Wert berechnet, der das Ergebnis des Integrierens bezüglich eines vorbestimmten geschlossenen Intervalles einer Kurve ist, die eine Änderung in dem vorgesagten Gleichgewichtswert mit der Zeit anzeigt, die aus einer Änderung in der vorhergesagten Gleichgewichtstemperatur mit der Zeit innerhalb des vorbestimmten Zeitbereiches erhalten ist, und diesen berechneten Wert als einen Index der Fluktuation in der vorhergesagten Gleichgewichtstemperatur mit der Zeit verwendet.

## Revendications

1. Thermomètre médical électronique pour mesurer la température corporelle d'une région dont la température doit être mesurée, comprenant :

   un moyen de détection de température pour mesurer ladite température corporelle de la région selon un intervalle temporel prédéterminé ;
   un moyen de mémoire pour stocker ladite température corporelle ;
   un moyen de prédiction pour prédire une température d'équilibre prédite sur la base de ladite température corporelle mesurée par ledit moyen de détection de température ;
   un moyen de détection d'instant pour détecter un instant auquel un taux de variation de ladite température corporelle en fonction du temps atteint une valeur prédéterminée,

   caractérisé par :

   un moyen de calcul, qui calcule une fluctuation temporelle de ladite température d'équilibre prédite dans une plage temporelle prédéterminée dans laquelle l'instant détecté par ledit moyen de détection d'instant joue le rôle de référence;
   un moyen de comparaison qui compare ladite fluctuation temporelle de ladite température d'équilibre prédite calculée par ledit moyen de calcul à une valeur de comparaison prédéterminée ; et
   un moyen de commande d'affichage qui, sur la base de résultats de la comparaison réalisée par ledit moyen de comparaison, affiche ladite température d'équilibre prédite obtenue à l'instant détecté par ledit moyen de détection d'instant et commande la mesure de température réalisée par ledit moyen de détection de température.

2. Thermomètre selon la revendication 1, dans lequel ledit moyen de calcul obtient une ligne de régression à partir d'une fluctuation de la température d'équilibre prédite en fonction du temps dans une plage temporelle prédéterminée et utilise la pente de ladite ligne de régression en tant qu'index de ladite fluctuation de ladite température d'équilibre prédite en fonction du temps.

3. Thermomètre selon la revendication 1, dans lequel ledit moyen de calcul obtient une ligne de régression à partir d'une fluctuation de ladite température d'équilibre prédite en fonction du temps dans une plage temporelle prédéterminée et utilise une interception de ladite ligne de régression en tant qu'index de ladite fluctuation de ladite température d'équilibre prédite en fonction du temps.

4. Thermomètre selon la revendication 1, dans lequel ledit moyen de calcul obtient la différence entre une valeur maximum et une valeur minimum de ladite température d'équilibre prédite, la différence entre la valeur moyenne de ladite température d'équilibre prédite et la valeur maximum ou la différence entre la valeur moyenne de ladite température d'équilibre prédite et la valeur minimum, dans ladite plage temporelle prédéterminée, et utilise l'une quelconque de ces valeurs en tant qu'index de ladite fluctuation de ladite température d'équilibre prédite en fonction du temps.

5. Thermomètre selon la revendication 1, dans lequel ledit moyen de calcul calcule une valeur qui est le résultat d'une intégration, par rapport à un intervalle fermé prédéterminé, d'une courbe indicative d'une variation de la valeur d'équilibre prédite en fonction du temps obtenue à partir d'une fluctuation de ladite température d'équilibre prédite en fonction du temps dans ladite plage temporelle prédéterminée et utilise cette valeur calculée en tant qu'index de ladite fluctuation de la température d'équilibre prédite en fonction du temps.

F I G. 1

FIG. 2

EP 0 482 562 B1

START

START TEMPERATURE
DETECTION — S10

MEASURE TEMPERATURE — S15

COMPUTE PREDICTED
TEMPERATURE — S20

STORE PREDICTED
TEMPERATURE — S25

COMPUTE RATE OF CHANGE IN
DETECTED TEMPERATURE — S30

CONDITION
FOR REALIZING VALIDITY
OF PREDICTION
SATISFIED? — S35

NO

YES

CALCULATE STABILITY (K) OF
PREDICTED TEMPERATURE — S40

STABLE? — S45

NO

YES

SOUND BUZZER — S50

DISPLAY TEMPERATURE ON LCD — S55

END OF
MEASUREMENT? — S60

NO

YES

END

FIG. 3

EP 0 482 562 B1

F I G. 4

F I G. 5

10

F I G. 6

F I G. 7

F I G. 8

F I G. 9(a)

F I G. 9(b)